# EUROPEAN PATENT SPECIFICATION

(11) **EP 4 428 393 B1**
(45) Date of publication and mention of the grant of the patent: **14.01.2026**
(21) Application number: 23160238.4
(22) Date of filing: 06.03.2023
(51) Int. Cl.: F16H 21/50, A61C 17/34, F16H 23/06, F16H 23/08

(54) **DRIVE UNIT COMPRISING A MOTION CONVERTER**
ANTRIEBSEINHEIT MIT EINEM BEWEGUNGSWANDLER
UNITÉ D'ENTRAÎNEMENT COMPRENANT UN CONVERTISSEUR DE MOUVEMENT

(43) Date of publication of application: 11.09.2024
(73) Proprietor: Braun GmbH, 61476 Kronberg im Taunus (DE)
(72) Inventor: ALTMANN, Niclas, 61476 Kronberg (DE); FRITSCH, Thomas, 61476 Kronberg (DE)
(74) Representative: P&G Patent Germany

(56) References cited:
- EP-A1- 4 050 237
- EP-A1- 4 050 238

## Description

### FIELD OF THE INVENTION

The present application is concerned with a drive unit comprising a motion converter. The motion converter is intended for receiving a rotational motion of a motor shaft and for providing a linear reciprocating motion at a drive shaft and the drive unit comprising the motor and the drive shaft may be disposed in a handle section of a personal care device and may be used for driving a head of the personal care device.

### BACKGROUND OF THE INVENTION

It is generally known to convert a rotary motion that may be provided by the shaft of a DC motor into an oscillatory motion by an appropriate gear mechanism, e.g., by means of a four-bar linkage as is described in DE 39 37 854 A1. DE 34 30 562 C1 describes an apparatus for converting the rotary motion of an eccentric driven by a motor shaft into a reciprocating motion of a working tool of an electrically driven small electric appliance. The described converting mechanism comprises a connecting rod connected with the eccentric and with a first lever arm of a double-armed rocker lever. The connecting rod comprises a film hinge, the center axis of said film hinge crosses the longitudinal axis of the first lever arm. The first lever arm is designed to be elastically twistable about its longitudinal axis. The double-armed rocker lever is pivotably mounted at a housing of the electric appliance and further comprises an axle pin that is coupled with the working tool. In operation the axle pin moves in an oscillating wiping motion relative to the pivot mount of the double-armed rocker lever.

A drive unit for converting a rotary motion of a motor shaft into a reciprocating linear motion of a drive shaft of the drive unit may comprise a motion converter. A drive unit with a motion converter is described in documents EP 4 050 237 A1 and EP 4 050 238 A1. In particular EP 4 050 238 A1 shows a drive unit comprising a motion converter the motion converter comprising a drive shaft, a motor shaft, a coupling unit, the drive shaft connected with the coupling unit for providing linear reciprocating motion in operation; a motor having the motor shaft providing a rotational motion around a longitudinal center axis of the motor shaft in operation; a motor shaft extension coupled to or connected with the motor shaft, the motor shaft extension comprising at least a first eccentric shaft element that is arranged eccentrically with respect to the longitudinal center axis so that it moves on a circular path around the longitudinal center axis in operation; wherein the first eccentric shaft element extends through a first elongated hole along a height direction of the first elongated hole, which first eccentric shaft element has a diameter that tightly fits into the first elongated hole in a width direction of the first elongated hole and the first eccentric shaft element can freely move in the first elongated hole in a length direction of the first elongated hole in operation, the motion converter further comprising a deformable unit; a mounting unit connected with the deformable unit; the coupling unit connected with the deformable unit, the coupling unit being structured to receive the drive shaft or the coupling unit comprising the drive shaft; a connector unit connected with the deformable unit.

It is an object of the present application to provide a drive unit with a motion converter, specifically a plastic injection molded motion converter, where the motion converter has a structure allowing a simple manufacturing.

### SUMMARY OF THE INVENTION

In accordance with at least one aspect, a drive unit is provided in accordance with claim 1. The dependent claims define further embodiments.

In accordance with at least one aspect, a personal care device is provided in accordance with claim 14.

### BRIEF DESCRIPTION OF THE DRAWINGS

The present application will be further elucidated by a detailed description of example embodiments and with reference to figures. In the figures
- Fig. 1: is a depiction of a personal care device realized as an electric toothbrush comprising a handle section and a head section, and the head section comprising a driven element realized as a personal care head;
- Fig. 2: is a depiction of a cut open top portion of a handle section of a personal care device comprising an exemplary drive unit in accordance with the present application;
- Fig. 3: is a depiction of an example drive unit in accordance with the present disclosure where the deformable unit may at least in part be made from bent sheet metal;
- Fig. 4A: is a perspective view onto an example motion converter realized in accordance with the present proposal for use in a drive unit as claimed;
- Fig. 4B: is a side view onto the motion converter shown in Fig. 4A;
- Fig. 5: is a magnification of a center portion of the motion converter of Figs. 4A and 4B;
- Fig. 6A: is side view of an example drive unit in accordance with the claimed invention, the drive unit comprising a proposed motion converter;
- Fig. 6B: is a cross-sectional depiction of the drive unit shown in Fig. 6A;
- Fig. 6C: is a magnification of portion A of the cross-sectional view of Fig. 6B; and
- Fig. 7: is a detailed depiction of an example receiver of a connecting unit in accordance with the present application.

### DETAILED DESCRIPTION OF THE INVENTION

In the context of the present description "personal care" shall mean the nurture (or care) of the skin and of its adnexa (i.e., hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. Terms in brackets mean that this is an optional feature. This shall not exclude that the proposed personal care device may have a more pronounced benefit in one or several of these nurturing or device areas than in one or several other of these areas. In the present description, an electric toothbrush was chosen to represent a personal care device. To the extent in which the details are not specific for an electric toothbrush, the proposed technology and concepts can be used in any other personal care device.

The present description is concerned with a motion converter, a drive unit having such a motion converter and a personal care device comprising such a drive unit.

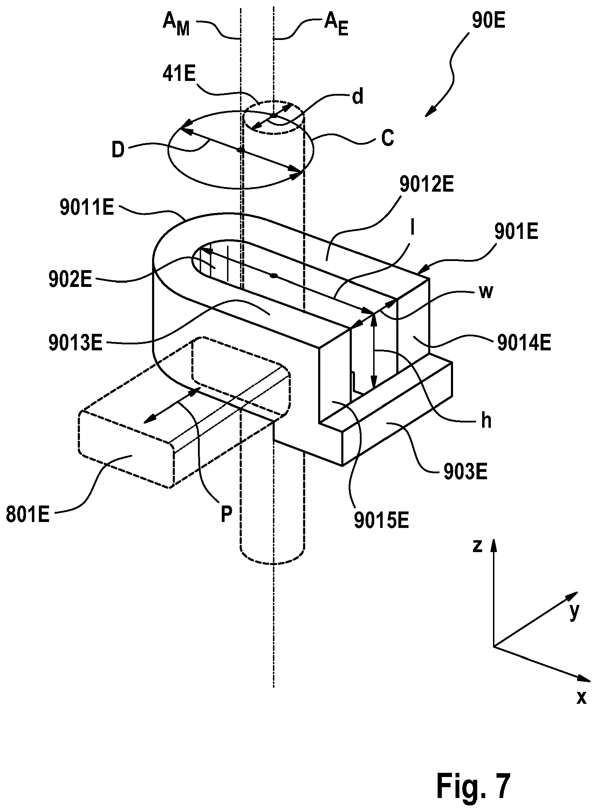

The motion converter is structured for conversion of a rotary motion provided by a motor shaft of a drive or motor such as a DC motor into a linear reciprocating motion, preferably wherein the direction of said linear reciprocating motion coincides with or is parallel to a longitudinal center axis of the motor shaft. The motion converter is structured for receiving at least a first eccentric shaft element of a motor shaft extension connected with the motor shaft and for receiving a drive shaft. The motor shaft extension may be a separate part that may be detachably attached to the motor shaft, or the motor shaft extension may be integral with the motor shaft. The motion converter has a mounting unit for fixedly mounting the motion converter in a personal care device at a motor or relative to the motor, a coupling unit for receiving the drive shaft, a connector unit structured for receiving the at least first eccentric shaft element, and a deformable unit that is connected with the connector unit, the mounting unit and the coupling unit. The connector unit comprises a first essentially U-shaped receiver having a U-base and two U-legs that together define a first elongated hole that is open at one end - the end that is opposite to the U-base. The first elongated hole has a length measured from an inner surface of the U-base towards the free ends of the U-legs, a width between the U-legs and a height, where the height may be non-constant over the length of the elongated hole - see discussion relating to Fig. 7 further below. The width should be constant at least along the length of the U-shaped first elongated hole in which the eccentric shaft element moves during operation. A first bracing element is provided that connects the free ends of the U-legs such that access into the first elongated hole across its full width and its full height is enabled in a length direction. The first bracing element may be essentially bar-shaped, U-shaped or O-shaped, but other shapes are possible as well as long as the function of the bracing element, namely connecting the free ends of the receiver U-legs while allowing complete access into the elongated hole in length direction. The width of the first elongated hole may be set such that the above mentioned first eccentric shaft element fits tightly into the first elongated hole in a width direction. The first eccentric shaft element may extend through the first elongated hole in a height direction and may have a cylindrical shape having a diameter that essentially coincides with the width of the first elongated hole. The connector unit may comprise a second essentially U-shaped receiver and potentially also a third essentially U-shaped receiver for receiving a second eccentric shaft element and a third eccentric shaft element, respectively. The previous discussion of the first receiver, the first elongated hole, the first bracing element and the first eccentric shaft element also holds for all such elements having a different numbering like second or third. The two, three or more receivers may have a rest position in which the respective elongated holes are aligned with each other at least in the width direction. The length directions of the elongated holes are parallel with each other. Each of the receivers may be connected with an arm element, e.g., a first arm element may be connected with the first essentially U-shaped receiver, which arm element(s) are then connected with the deformable unit so that a motion transferred from the eccentric shaft element(s) to the receiver(s) is transferred by the arm element(s) to the deformable unit. In some examples, the arm elements of two or more aligned receivers may join to transfer the motion of the two or more aligned receivers to the deformable unit via a single joint arm element. The structure of the two joining arm elements may essentially be like a tuning fork.

The deformable unit may be structured for deformation in a manner so that the periodic force provided by the arm element(s) onto the deformable unit leads to a linear reciprocation of the coupling unit and thus of the driving shaft when the driving shaft is connected with the coupling unit. To achieve this, the deformable unit may have a generally convex quadrilateral-type structure, such as a rhomboidal structure, having four edges and four vertices, where the mounting unit and the coupling unit may be provided at two opposite vertices of the convex quadrilateral-type structure. The connector unit may be connected with a least one of the two other vertices, preferably with both of the two other essentially opposite vertices by means of one or more of the mentioned arm element(s).

The above-described U-shaped receivers and preferably the complete motion converter can be made by plastic injection molding, where it is sufficient to provide two mold halves that move together in length direction of the receiver(s) as due to the position of the bracing element(s) no additional core is needed to define the U-shaped elongated hole(s) of the receiver(s).

The term "U-shaped" should be understood to refer to the inner shape of the receiver defining the elongated hole. The receiver may have an outer shape that differs from a U-shape.

The receiver(s) may also be described with reference to a Cartesian coordinate system having an x-axis, a y-axis, and a z-axis, where the length direction is parallel to the x-axis, the width direction is parallel to the y-axis and the height direction is parallel to the z-axis. The terms axis and direction are synonymously used in the present application. The bracing element may then extend in a plane parallel to the y-z plane even though it shall not be excluded that the bracing element may be curved, specifically with a curvature in length direction. In terms of the directions defined by such a Cartesian coordinate system, the first and/or the further eccentric shaft elements rotate around the longitudinal center axis of the motor shaft, i.e., along a circular path around the longitudinal center axis, which longitudinal center axis is parallel to the z axis, which means that the motion, i.e., the circular motion of the first and the further eccentric shaft elements essentially occurs in an x-y plane. The elongated hole(s) of the receivers are structured as mentioned above and thus the receivers are moved by a motion of the respective eccentric shaft element in x direction, while the motion in y direction freely occurs in the elongated hole and does not cause the receiver(s) to move. The arm element(s) of the receivers may generally extend in y direction, where the skilled person will understand that each element described herein is of a naturally 3-dimensional shape and will extend in all directions, but that here the relevant direction of extension is meant along which the arm element(s) extend to connect the receiver(s) with the deformable unit. The periodic motion of the arm elements in y direction leads to a deflection of the deformable unit in y direction. Due to the structure of the deformable unit, the periodic motion of the arm elements also leads to a resulting periodic deformation in z direction, which results in a periodic motion of the coupling unit in z direction, i.e., a linear reciprocation of the coupling unit in z direction.

The drive unit in accordance with the claimed invention may make use of a standard motor such as a DC motor that can be acquired as an off-the-shelf part and thus has a typically low-cost profile. To achieve a conversion as described, the motor shaft comprises a motor shaft extension comprising at least the first eccentric shaft element that is arranged eccentric with respect to a longitudinal center axis of the motor shaft so that in operation the first eccentric shaft element moves on a circular path around the longitudinal center axis of the motor shaft, the circle extending in a plane being perpendicular to the longitudinal center axis. The motor shaft extension may be integral with the motor shaft or may be a separate part that is detachably or non-detachably connected with the motor shaft. The motor shaft extension may comprise two, three or more eccentric shaft elements that are arranged behind each other with respect to the direction defined by the longitudinal center axis, i.e., behind each other in z direction. While the first eccentric shaft element is intended to extend through the first elongated hole of the first essentially U-shaped receiver, the second eccentric shaft element is intended to extend though the second elongated hole of the second essentially U-shaped receiver etc. In the drive unit, the first eccentric shaft element extends through the first elongated hole in a height direction, i.e., in z direction, that coincides with the direction defined by the longitudinal center axis and optionally the second eccentric shaft element extends through the second elongated hole in the same manner, and further optionally a third eccentric shaft element extends through a third elongated hole.

The firsts eccentric shaft element and the second eccentric shaft element may be disposed such that they rotate in operation around the longitudinal center axis with a 180 degrees angular offset. The third eccentric shaft element may then be arranged to be aligned in motion with the first eccentric shaft element. A first arm connecting the first essentially U-shaped receiver with the deformable unit and a third arm connecting the third essentially U-shaped receiver with the deformable unit may join prior to the point where the joint arm is connected with the deformable unit.

The present application is also concerned with a personal care device that comprises a drive unit as previously discussed. The personal care device may comprise a head section that is coupled with the drive shaft so that the head section or a driven element of the head section is in operation driven into a back-and-forth motion such as an oscillating motion or a reciprocating motion, optionally wherein the mounting unit of the motion converter is fixedly mounted with respect to the motor, and further optionally wherein in operation the circular motion of at least the first eccentric shaft element causes at least the first essentially U-shaped receiver to transfer a periodic force onto the deformable unit so that the deformable unit periodically deforms, preferably wherein the periodic deformation means a periodic deformation in a z direction and a 180 degrees phase-shifted periodic deformation in a y direction being perpendicular to the z direction. That means that in case the deformation in z-direction leads to an extension of the deformable unit in z-direction, the deformation of the deformable unit causes a contraction of the deformable unit in y-direction.

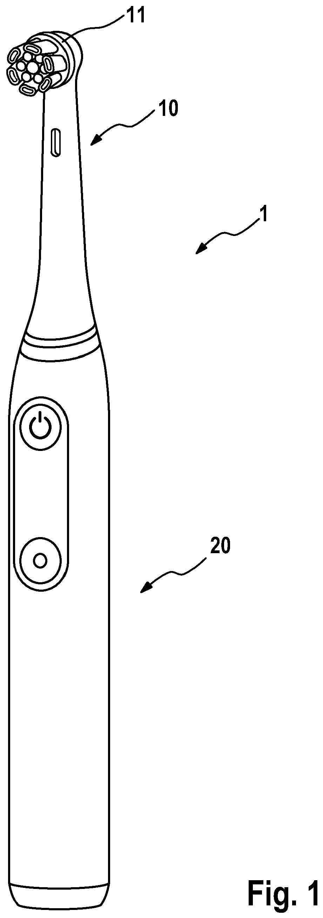

Fig. 1 is a depiction of an example personal care device 1 realized as an electric toothbrush, the personal care device 1 comprises a head section 10 and a handle section 20, where the head section 10 may comprise a driven element 11, here realized as a brush head, or the head section may alternatively realize the driven element, i.e., the complete head section would then be driven into motion rather than just a driven element of the head section. In case the head section 10 comprises a driven element 11, the head section 10 may comprise connector elements to releasably attach the head section 10 to the handle section 20 so that at least a mounting section of the head section 10 is fixed relatively to the handle section 20. The head section 10 may be repeatedly detachable from and again attachable to the handle section 20 to allow cleaning of the head section 10 or to replace a worn-out head section by a new head section or to exchange a first kind of head section with a different kind of head section. The handle section 20 may comprise a drive unit as discussed herein for driving the driven element 11 into motion.

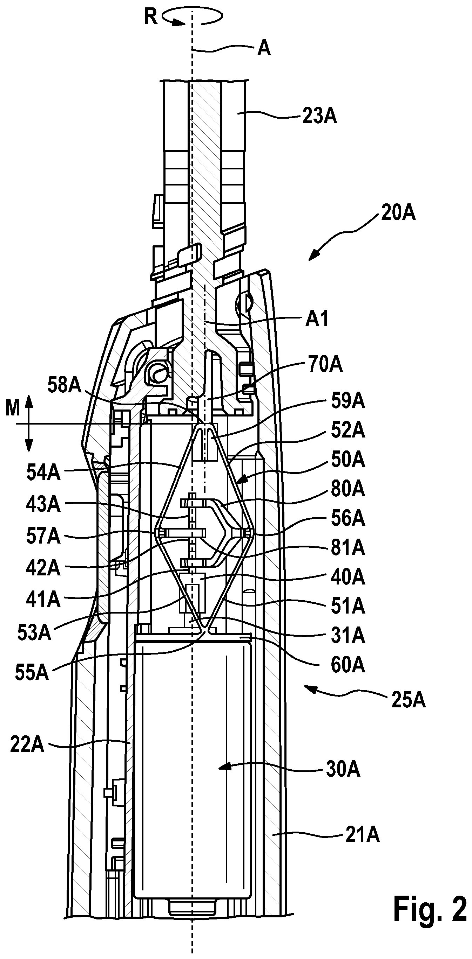

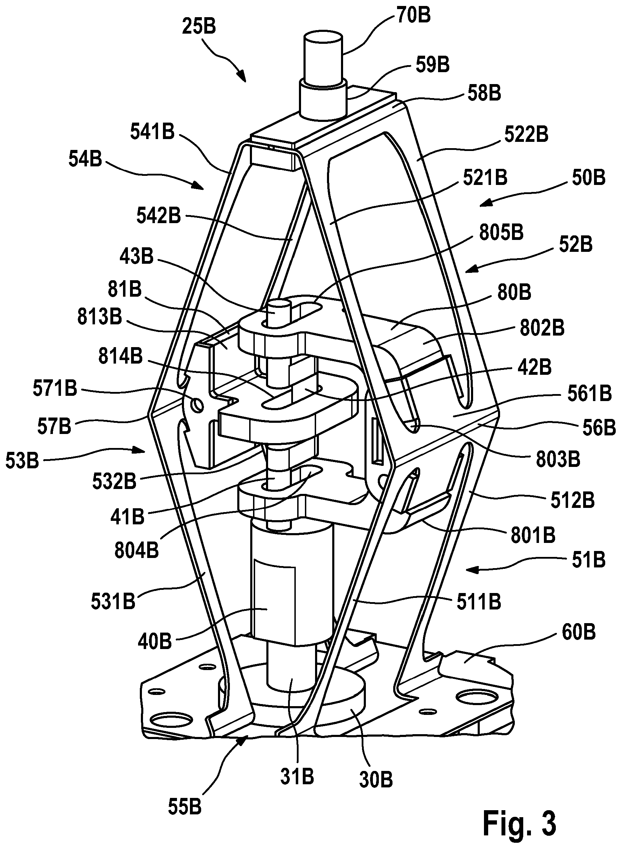

Fig. 2 is a depiction of a cut open top portion of a handle section 20A of a personal care device, where the handle section 20A may be used as handle section for a personal care device 1 as depicted in Fig. 1. A lower bottom portion of the handle section 20A is not shown. The handle section 20A comprises a handle housing 21A in which a motor carrier 22A is mounted and an attachment shaft 23A for detachable attachment of a head section as is generally shown in Fig. 1. The handle section 20A also comprises a drive unit 25A that is described in the following. The drive unit 25A comprises a motor 30A having a motor shaft 31A and a motor shaft extension 40A, a drive shaft 70A, and a motion converter 5A. The motion converter 5A comprises a deformable unit 50A, a mounting unit 60A, a coupling unit 59A and a connector unit 8A. The motion converter 5A may be a single integral element, e.g., made by plastic injection molding, or the motion converter 5A may comprise several elements that are secured at each other, as will be discussed in relation to Fig. 3. It shall be understood that some features shown in Fig. 2 are optional and are not essential in accordance with the claimed invention as will be clear to the skilled person. E.g., the motor carrier 22A is optional and the drive unit 25A may be directly mounted at the handle housing 21A.

A motor 30A is secured at the motor carrier 22A, the motor 30A comprising the motor shaft 31A for providing a rotational motion R around a center longitudinal axis A of the motor shaft 31A. The motor shaft 31A is extended by the motor shaft extension 40A that in the shown embodiment comprises a first eccentric shaft element 41A, a second eccentric shaft element 42A, and a third eccentric shaft element 43A. As the three eccentric shaft elements 41A, 42A, 43A are all shown in their center position, their relative position with respect to the longitudinal center axis A and with respect to each other cannot well be seen in Fig. 2 and reference is made to Fig. 3 showing a perspective view. The motor shaft extension 40A may be integral with the motor shaft 31A or may be an additional element that is removably or non-removably attached to the motor shaft 31A. The first eccentric shaft element 41A and the third eccentric shaft element 43A have the same circumferential position around the longitudinal center axis A and the second eccentric shaft element 42A has a circumferential position that is offset by 180 degrees to the first and third eccentric shaft elements 41A, 43A. In operation, the three eccentric shaft elements 41A, 42A and 43A move on circles around the longitudinal center axis A, which circles extend in planes that are perpendicular to the longitudinal center axis A. The first and the third eccentric shaft elements 41A and 43A are coupled with a first crossbeam 80A comprising a first arm element and a third arm element that join each other. The eccentric shaft elements 41A, 42A, 43A are each coupled to their respective arm elements by means of elongated holes, which relationship will be clearer from Fig. 3 and the description relating to Fig. 3. The first arm element is connected with the first eccentric shaft element 41A and the third arm element is connected with the third eccentric shaft element 43A. Thus, the first and the third eccentric shaft elements 41A and 43A cooperate like a single eccentric shaft element in the shown embodiment to put the first crossbeam 80A into a periodic linear reciprocating motion along a first crossbeam direction that is perpendicular to the longitudinal center axis A. The second eccentric shaft element 42A is likewise coupled with a second crossbeam or second arm element 81A and when the second eccentric shaft element 42A rotates around the longitudinal center axis A, the second eccentric shaft element 42A puts the second crossbeam or second arm element 81A into a periodic linear reciprocating motion along a second crossbeam axis that is coinciding with or is at least parallel to the first crossbeam axis. The periodic circular motion of the first and third shaft elements 41A and 43A and of the second shaft element 42A, respectively, is offset by 180 degrees, i.e., when the first crossbeam 80A is moved to the right, the second crossbeam 81A is moved to the left and vice versa (where here left and right are defined with respect to the paper plane). The arms and crossbeams together with the mentioned elongated holes form a coupling unit 8A that is connected with the deformable unit 50A.

The first and second crossbeams 80A and 81A, i.e., the first, second and third arms, are each connected with a deformable unit 50A. The deformable unit 50A is here realized as a rhomboidal structure having four edges and four vertices, but this shall not be considered as limiting. The rhomboidal structure is a specific case from the more general class of convex quadrilateral-type structures, which represent one class of possible realizations of the deformable unit. The four edges of the rhomboidal structure are here realized by four arm sections 51A, 52A, 53A and 54A. A first arm section 51A has a first end that is secured at the mounting structure 60A, which mounting structure 60A is here fixedly mounted at or with respect to the motor 30A. Opposite to the first arm section 51A in the rhomboidal structure is a third arm section 53A that has a first end that is as well secured at the mounting structure 60A so that the first ends of the first arm section 51A and of the third arm section 53A form a first vertex 55A of the rhomboidal structure of the deformable unit 50A. A second end of the first arm section 51A connected with a first end of a second arm section 52A at a generally obtuse angle and the connection point is considered as a second vertex 56A (or a "knee section" due to the obtuse angle at which the first and second arm sections meet) of the rhomboidal structure formed by the deformable unit 50A. A second end of the second arm section 52A connected with a coupling unit 59A. A first end of a fourth arm section 54A opposite to the second arm section 52A connected with a second end of the third arm section 53A at an obtuse angle, thereby forming a third vertex 57A (or a further "knee section"). A second end of the second arm section 52A and a second end of the fourth arm section 54A are secured to each other at the coupling element 59A, thereby forming a fourth vertex 58A.

The first crossbeam 80A, i.e., the joined together first arm and third arm, is connected with the second vertex 56A and the second crossbeam 81A or the second arm is fixedly connected with the third vertex 57A, which is the vertex opposite to the second vertex 56A. Once the first and second crossbeams move both outwards or both inwards, the deformable unit 50A is deformed and the coupling unit 59A is set into a linearly reciprocating motion along axis A1. When the two crossbeams 80A, 81A move outwards, the coupling unit 59A is drawn downwards to the motor 30A and when the two crossbeams 80A, 81A move inwards, the coupling unit 59A is shifted upwards away from the motor 30A - a periodic linear reciprocating motion M as indicated by a double arrow results, which linear reciprocating motion M occurs along the axis A1 that here is parallel to the center longitudinal axis A, along which the motor shaft 31A rotates as is indicated by arrow R.

The four vertices 55A, 56A, 57A and 58A may each be realized as essentially rigid structures without a hinge functionality. The arm sections 51A, 52A, 53A and 54A then need each to be deformable from their essential linear extension as shown in Fig. 2, which represents their natural state or rest state, into a deformed state, e.g., a shape where the arm sections 51A, 52, 53A and 54A may each bulge inwards or outwards or may extend on an S-shaped curve between the respective vertices that they connect. The arm sections 51A, 52A, 53A and 54A may essentially be made from a resilient material such as a spring steel or a resilient plastic material so that the energy that is needed to deform the arm sections 51A, 52A, 53A and 54A is stored in the resilient material and is released again when the arm sections 51A, 52A, 53A and 54A are brought back into their natural state.

The motor 30A together with the motor shaft extension 40A, the drive shaft 70A and the motion converter 5A form a drive unit 25A in accordance with the present application.

Fig. 3 is a depiction of another example drive unit 25B that has various structural similarities with the drive unit 25A shown in and discussed with reference to Fig. 2. The drive unit 25B comprises a motion converter 5B having a deformable unit 50B, a mounting unit 60B connected with the deformable unit, a coupling unit 59B connected with the deformable unit 50B, and a connector unit 8B connected with the deformable unit 50B. The drive unit 25B further comprises a motor 30B (only partly shown) having a motor shaft 31B, a shaft extension 40B that is attached to the motor shaft 31B, and a drive shaft 70B connected with the coupling unit 59B. The mounting unit 60B is here fixedly secured at the motor 30B, but in other embodiments, the motor 30B and the mounting unit 60B may be mounted at the same base structure (e.g., a handle of a personal care device) so that they are fixedly secured relative to each other. Generally, the shaft extension 40B may be integral with the motor shaft 31B or may be a separate element that is fixedly secured to the motor shaft 31B. The shaft extension 40B may in the latter case be snap-fitted onto the motor shaft 31B, may be frictionally locked, welded, glued or fixedly attached in any other manner known to the skilled person. The drive unit 25B comprises a drive shaft 70B connected with a coupling unit 59B, which drive shaft 70B can be coupled with a driven element. While the motor shaft 31B will provide a rotational motion around its longitudinal center axis, this motion is converted by the motion converter 5B of the drive unit 25B and the drive shaft 70B will instead provide a periodic linear reciprocating motion along an axis that is coinciding with or parallel the longitudinal center axis of the motor shaft 31B (see Fig. 2 for an indication of the respective longitudinal center axis A). The shaft extension 40B here again comprises a first, a second and a third eccentric shaft element 41B, 42B, and 43B. The eccentric shaft elements 41B, 42B, and 43B are each offset with respect to the longitudinal center axis and thus rotate around the longitudinal center axis along circular paths in operation as was described also for Fig. 2. Similarly, as was described for Fig. 2, the first and third eccentric shaft elements 41B and 43B have the same circumferential position and thus move in positional and angular alignment, while the second eccentric shaft element 42B is circumferentially positioned at a 180-degrees offset.

The first and third eccentric shaft elements 41B and 43B are coupled with the deformable unit 50B via the connector unit 8B. The connector unit 8B here comprises a first crossbeam 80B that is again forklike and is realized by a first arm 801B and a third arm 802B that join each other. The first and third arms 801B and 802B are here parallel to each other in a free end region, but this shall not be understood as limiting and any other structure may be chosen as well. The second eccentric shaft element 42B is coupled with the deformable unit 50B by means of a second crossbeam or second arm 81B of the connector unit 8B. The first and second crossbeams 80B and 81B may be said to extend parallel to each other. The first crossbeam 80B is arranged to move along a first crossbeam direction that is perpendicular to the longitudinal center axis of the motor shaft 31B and the second crossbeam 81B is arranged to move along a second crossbeam direction parallel to the first crossbeam direction, which second crossbeam axis is then of course also perpendicular to the longitudinal center axis of the motor shaft 31B.

The deformable unit 50B is designed to have a basically rhomboidal structure with four edges and four vertices. A first edge is realized by a first arm section 51B, a second edge is realized by a second arm section 52B, a third edge is realized by a third arm section 53B, and a fourth edge is realized by a fourth arm section 54B. The first arm section 51B and the third arm section 53B are each mounted with a first end on the mounting structure 60B that is here fixedly connected at the motor 30B. The mounting points together form a first vertex 55B of the rhomboidal structure, where the vertex is a so-called "extended vertex" as the mounting sides of the first ends of the first and second arm sections 51B and 53B have a certain distance. The first and third arm sections 51B and 53B are outwards oriented with respect to a center axis of the rhomboidal structure. The first arm section 51B has a second end connected with a first end of a second arm section 52B to form a second vertex 56B of the rhomboidal structure. As seen in Fig. 3, the first and the second arm sections 51B and 52B meet at an obtuse angle, which shall not be considered as limiting - depending on the design of the deformable unit and in case of a design comprising arm sections basically as discussed in the present context, these arm sections may meet at an obtuse or an acute angle or the angle between both arm sections may be about 180 degrees in the rest state of the deformable unit. Further, a second end of the third arm section 52B and a first end of the fourth arm section 54B are connected and form a third vertex 57B. The second ends of the second arm section 52B and of the fourth arm section 54B are connected to form a fourth vertex 58B, where also a coupling element 59B is integrated into this slightly extended fourth vertex 58B. The drive shaft 70B is here connected with the coupling unit 59B.

As can be seen in the perspective view shown in Fig. 3, the arm sections 51B, 52B, 53B and 54B are realized as "double-arm sections", i.e., each of the arm sections comprises two parallel arm elements arranged at a distance, which makes the deformable unit 50B overall rather lightweight on the one hand but still stable against torsional deformations on the other hand. In the design as shown, the first arm section 51B comprises two parallel arm elements 511B and 512B, the second arm section 52B comprises two parallel arm elements 521B and 522B, the third arm section 53B comprises two parallel arm elements 531B and 532B and the fourth arm section 54B comprises two parallel arm elements 541B and 542B. At the second, third and fourth vertices, the parallel arm elements are connected by vertical bar elements. The second vertex 56B and the third vertex 57B each comprise mounting elements 561B and 571B, respectively, that provide fixation points for the first and second crossbeams 80B and 81B of the connector unit 8B.

The first crossbeam 80B comprises a first and a second crossbeam arm 801B and 802B that are here parallel to each other for a certain extension length to not get in conflict with the second crossbeam 81B moving in between the two crossbeam arms 801B and 802B, where the first crossbeam arm 801B is coupled with the first eccentric shaft element 41B by means of an elongated hole 804B provided in the first crossbeam arm 801B and the second crossbeam arm 802B is coupled to the third eccentric shaft element 43B by means of an elongated hole 805B provided in the second crossbeam arm 802B. The elongated holes 804B and 805B are oriented perpendicular to the longitudinal center axis of the motor shaft 31B and perpendicular to the first crossbeam axis. The first eccentric shaft element 41B extends through the elongated hole 804B and the third eccentric shaft element 43B extends through the elongated hole 805B. The first crossbeam 80B comprises a connecting portion 803B at which the first and second crossbeam arms 801B and 802B join each other and which connecting portion 803B is fixedly connected with the mounting element 561B of the second vertex 56B of the deformable unit 50B. The first crossbeam 80B and the mounting element 561B may be connected by means of overmolding, caulking, screwing, gluing, welding or by any other connection means known to the skilled person. The elongated holes 804B and 805B are sized so that the first and third eccentric shaft elements 41B and 43B essentially tightly fit through the elongated holes 804B and 805B, respectively, with respect to the direction defined by the first crossbeam axis and can move freely in the long direction of the elongated holes 804B and 805B when the motor shaft 31B rotates the shaft extension 40B. Due this design, the elongated holes 804B and 805B only transfer the motion of the first and third eccentric shaft elements 41B and 43B in the direction of the first crossbeam axis to the second vertex 56B. It is noted again that the first and the second eccentric shaft elements 41B and 41C move in alignment. Similarly, the second crossbeam 81B comprises a connecting portion 813B that is fixedly connected with the mounting element 571B of the third vertex 57B. The elongated hole 814B is sized so that the second eccentric shaft element 42B essentially tightly fits through the elongated hole 814B with respect to the direction defined by the second crossbeam axis and can move freely in the long direction of the elongated hole 814B when the motor shaft 31B rotates the shaft extension 40B. Due this design, the elongated hole 814B only transfers the motion of the second eccentric shaft elements 42B in the direction of the second crossbeam axis to the third vertex 57B. As the second eccentric shaft element 42B is circumferentially offset by a 180-degrees distance to the first and third eccentric shaft elements 41B and 43B, the first crossbeam 80B and the second crossbeam 81B move in a counter-oscillating manner, i.e. when the first crossbeam moves to the right ("right" defined with respect to the paper plane) then the second crossbeam moves to the left and vice versa, implying that the motion direction of both crossbeams periodically reverses at the same time instants. Due to this design, the deformable unit 50B is first "widened" when the first crossbeam 80B moves to the right and the second crossbeam 81B moves to the left, which causes the coupling element 59B to be drawn towards the motor 30B and the deformable unit 50B is then "squeezed together" when the first crossbeam 80B moves to the left and the second crossbeam 81B moves to the right, which moves the coupling element 59B upwards and beyond its rest position to a maximum deflection away from the motor 30B. This linear reciprocating motion of the coupling element 59B happens periodically and along a direction that is coinciding with or that is parallel to the longitudinal center axis of the motor shaft 31B. It is noted here that in general, i.e., for all embodiments, the eccentric shaft element(s) must have a height extension along the longitudinal axis that accommodates the deformation of the deformable unit which causes the connection unit to move up and down in accordance with the deformation.

In the examples shown in Figs. 2 and 3, the first crossbeam has a fork-like structure and cooperates with two axially displaced eccentric shaft elements, which allows the coupling portion of the first cross beam to have the same axial position as the axial position of the coupling portion of the second crossbeam. This allows a design in which the first and third arm elements and the second and fourth arm elements have the same length.

A drive unit with a hinge element in accordance with Figs. 2 and 3 is also described in the previously mentioned prior art documents EP 4 050 237 A1 and EP 4 050 238 A1.

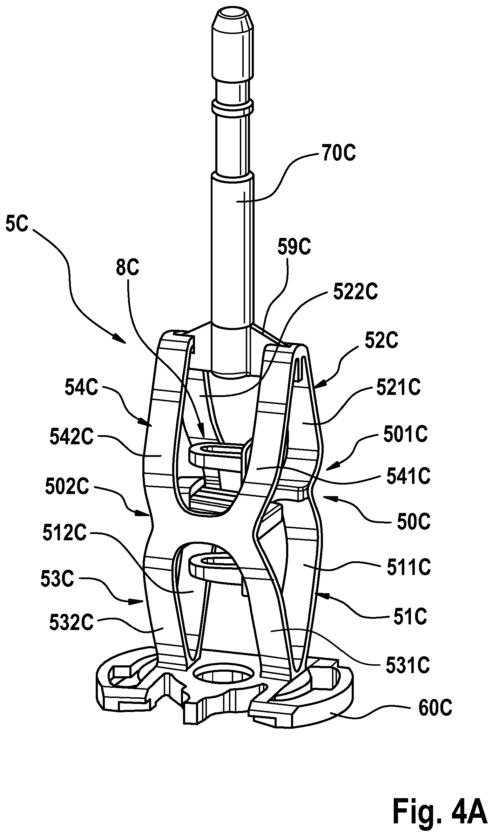

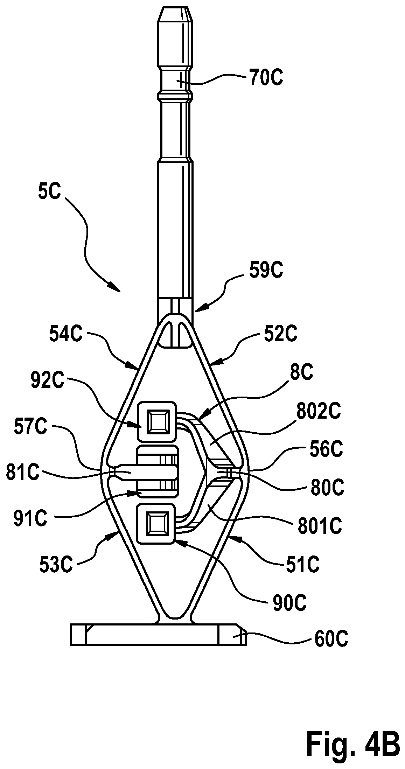

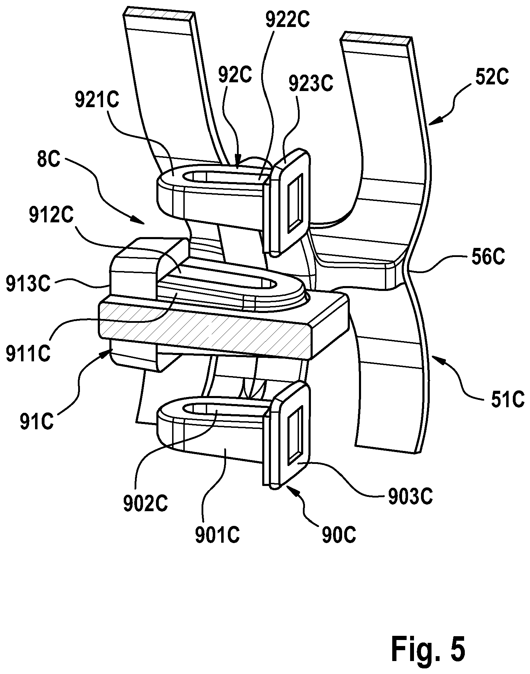

The focus of the present application lies on a modified design of the connector unit 8A, 8B discussed with respect to Figs. 2 and 3 and specifically a modified design of the receivers that define the elongated holes 804B, 805B, 814B. As can be seen in Fig. 3, the elongated holes 804B, 805B and 814B are defined by elements having an essentially O-shaped or lozenge-shaped cut-out, where the cut-out defines the elongated hole. As will be discussed with reference to Figs. 4A, 4B and 5, such O-shaped cavities require a long core in a plastic injection molding tool, e.g., a core that defines all three cut-outs. In accordance with the herein discussed design change in comparison to Figs. 2 and 3, the O-shaped receivers are replaced by U-shaped receivers that comprise a bracing element that is positioned such that the inner cut-out of the elongated hole defined by the U-shaped receiver can be accessed from the side, i.e., by introducing a form-shaping element of a mold tool side that extends in a length direction of the elongated hole. The proposed design thus allows to discard the long core needed for the manufacture of the motion converters 8A or 8B. The mentioned bracing element may be bar-shaped, U-shaped or O-shaped. Bracing elements discussed below are all O-shaped as such a bracing element provides stabilization of the free ends of the U-legs of the U-shaped receivers and provides geometric symmetry so that the stability is similar in all directions. If such a stabilizing bracing element would not be used, the width of the elongated hole defined by the U-shaped receivers would become undefined in operation as the eccentric shaft elements would bend open the U-legs so that noise and vibration would result. The herein proposed design modification of a motion converter previously discussed in the above referenced applications thus serves the object to provide a motion converter that is easy to manufacture in a plastic injection molding process and that nonetheless has a decent stability of the receivers that are intended to cooperate with eccentric shaft elements so that a periodic deformation of the deformable unit is generated and thus the rotary motion of a motor shaft of a motor such as an off-the-shelf DC motor is converted into a linear reciprocation of a drive shaft. It shall be understood that the ease of manufacture does not change in case that the motion converter is not completely made in a plastic injection molding process but where some inserts such as metal sheets are used to realize portions of the motion converter.

Fig. 4A is a perspective depiction of an example motion converter 5C and Fig. 4B is a side view onto the motion converter shown in Fig. 4A. Fig. 5 is a magnified detail of a connector unit 8C of the motion converter 5C shown in Figs. 4A and 4B. Such motion converter is an example embodiment that can be employed in a drive unit as claimed.

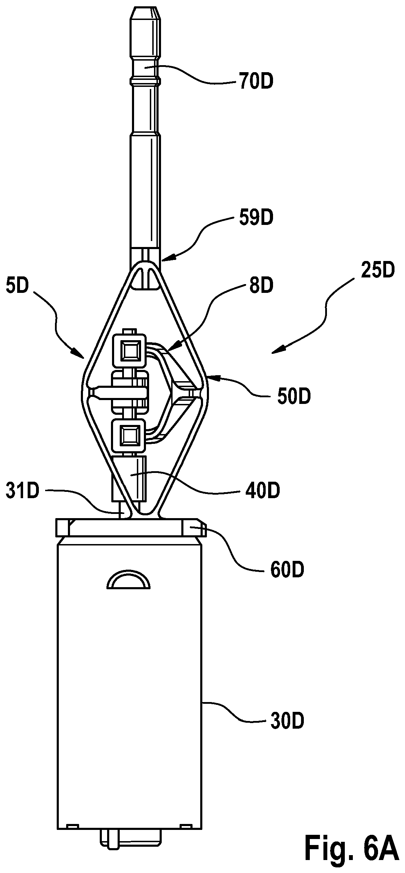

The motion converter 5C shown in Figs. 4A and 4B is essentially a single integral part made by plastic injection molding, where a metal drive shaft 70C is connected with a coupling section 59C of the motion converter 5C, where in the plastic injection molding process the metal drive shaft 70C was provided as an insert into a respective cavity of a molding tool. The motion converter 5C comprises a deformable unit 8C connected with a mounting unit 60Cm the coupling unit 59C and a connector unit 8C that is partly hidden by the deformable unit 8C in the perspective view of Fig. 4A and can be better seen in the front view of Fig. 4B. The basic structure of the connector unit 8C is similar to the connector units 8A and 8B that were discussed with respect to Figs. 2 and 3. Thus, reference is made to the discussion relating to Figs. 2 and 3. The deformable unit 50C is again designed to have a basically rhomboidal structure with four edges and four vertices, where the deformable unit 50C may be described to be formed from two oppositely positioned H-shaped arm structures, where each of the H-shaped arm structures is flexed outwards at the level of the vertical bar of the H. The two oppositely arranged H-shaped arm elements realize a first arm section 51C having two essentially parallel arm elements 511C and 512C, a second arm section 52C having two essentially parallel arm elements 521C and 522C, a third arm section 53C having two essentially parallel arm elements 531C and 532C, and a fourth arm section 54C having two essentially parallel arm elements 541C and 542C. As can best be seen in Fig. 4B, the connector unit 8C comprises a first receiver 90C, a second receiver 91C and a third receiver 91C, which receivers are again intended to receive eccentric shaft sections as can be seen from Figs. 6A to 6C.

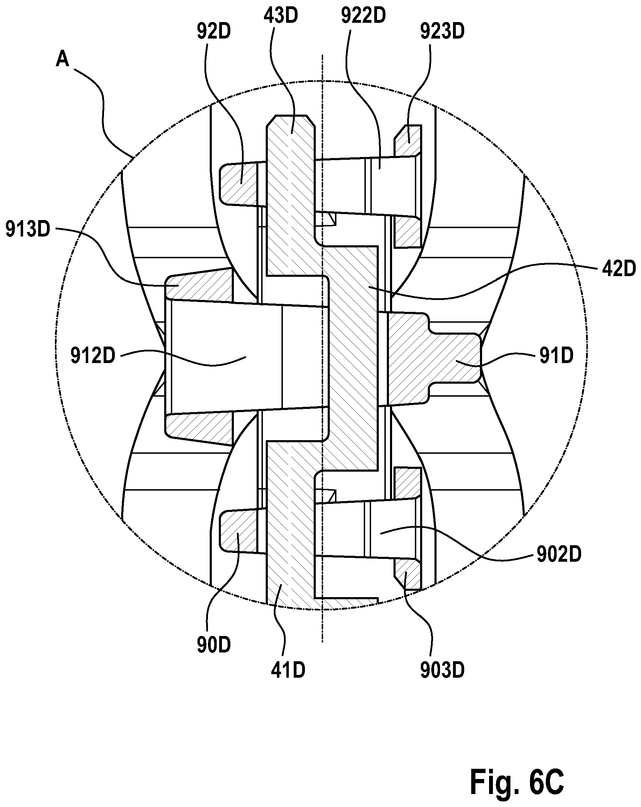

Fig. 5 is a magnification of a cut-out detail view of the motion converter 8C from Fig. 4A. In this depiction, the motion converter 8C comprises three receivers 90C, 91C and 92C. The first receiver 90C has an essentially U-shaped receiver body 901C, an elongated receiver hole 902C, and an O-shaped bracing element 903C. The second receiver 91C has an essentially U-shaped receiver body 911C, an elongated receiver hole 912C, and an O-shaped bracing element 913C. The third receiver 92C has an essentially U-shaped receiver body 921C, an elongated receiver hole 922C, and an O-shaped bracing element 923C. While the bracing elements 903C and 923C face into one direction, the second bracing element 913C faces into the opposite direction, which design was chosen for manufacturing reasons. A more extensive discussion of the structure of the receivers and the respective eccentric shaft extension elements is provided in connection with Fig. 6C, and a more general discussion of the structure of the receivers is given with reference to Fig. 7.

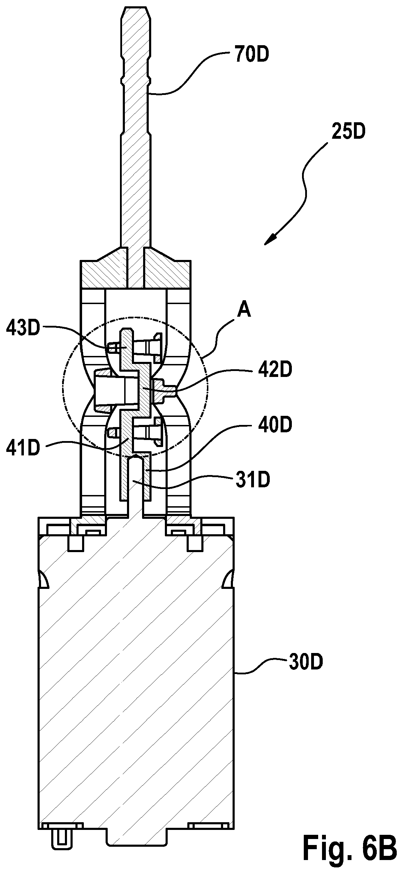

Fig. 6A is a side view onto a drive unit 25D in accordance with the claimed invention comprising a motion converter 5D shown that may be the same as shown in Figs. 4A, 4B and 5. Fig. 6B is a cross-sectional cut through the drive unit 25C shown in Fig. 6A, where the drive unit was rotated by 90 degrees around its longitudinal axis. Fig. 6C is a magnification of a detail of the connector unit 8D and of a motor shaft extension 40D as shown in Fig. 6B.

The drive unit 25D shown in Fig. 6A comprises the drive 30D that may be realized as an off-the-shelf DC motor, the motion converter 5D and a drive shaft 70D. The motion converter 5D comprises a deformable unit 50D, a mounting unit 60D, a connector unit 8D and a coupling unit 59D. The drive or motor 30D comprises a motor shaft 31D and a motor shaft extension 40D. These elements and their function and structure has already been described in previous paragraphs and does not need to be repeated. The cross-section shown in Fig. 6B specifically was taken in a plane that extends through the motor shaft 31D, the motor shaft extension 40D and three eccentric shaft elements 41D, 42D and 43D. A portion A is indicated in Fig. 6B that is shown in a magnified manner in Fig. 6C. In Fig. 6C it can be seen that the first eccentric shaft element 41D extends through a U-shaped cut-out 902D in the form of a U-shaped elongated hole in a first receiver 90D. The second eccentric shaft element 42D extends through a U-shaped cut-out 912D in the form of a U-shaped elongated hole in a second receiver 91D. The third eccentric shaft element 43D extends through a U-shaped cut-out 922D in the form of a U-shaped elongated hole in a third receiver 92D. As was already discussed with respect to the motion converter 5C partially shown in Fig. 5, each of the receivers 90D, 91D, and 92D comprises a respective O-shaped bracing element 903D, 913D and 923D that provide stability of the open ends of the U-shaped elongated holes 902D, 912D and 922D against becoming bend open. It can further be seen that the receivers 90D, 91D and 92D and thus the respective elongated holes 902D, 912D and 922D each taper towards the closed end of the respective receiver. This may result in a better deforming of mold projections that define the elongated holes.

Fig. 7 is a schematic depiction of a receiver 90E of a connector unit that is part of a motion converter for a drivetrain as proposed herein. An eccentric shaft element 41E is shown in dashed lines as is an arm 801E of the connector unit. Focus of Fig. 7 is on the structure of the receiver 90E and its interaction and resulting motion due to motion of the eccentric shaft element 41E.

The receiver 90E has an essentially U-shaped cut-out in the form of an elongated hole 902E of the receiver 90E and a generally U-shaped body 901E. The U-shaped body 901E has a U-base 9011E and two U-legs 9012E and 9013E that together define the elongated hole 902E. The U-legs 9012E and 9013E have free leg ends 9014E and 9015E, respectively, that are fixed relative to each other by a bracing element 903E that in the shown embodiment is bar-shaped. A coordinate system defining an x direction, a y direction, and a z direction is shown in Fig. 7. The bar-shaped bracing element 903E extends in the y direction. While the bracing element 903E is a three-dimensional object that obviously extends in all three spatial directions, it is understood that "extension direction" as used herein shall generally refer to the major extension direction. The elongated U-shaped hole 902E has a length l that with respect to the indicated coordinate system extends in the x direction, a width w that extends in the y direction and a height h that extends in the z direction. The bracing element 903E is structured and positioned so that access into the elongated hole 902E is provided across the full width w and the full height h via the x direction. This allows to define the receiver 90E by two mold halves that are closed by moving them together in x direction. This would not be possible if the elongated hole were an O-shaped cut-out, i.e., the elongated hole could then only be defined by an additional core extending in z direction as was already mentioned above due to the fact that an O-shaped hole is closed along its circumference, while the U-shaped hole has an opening. In operation of a drivetrain as discussed in the present application, the eccentric shaft element 41E extends through the elongated hole 902E in z direction. The eccentric shaft element 41E has a cylindrical shape and a diameter d that essentially coincides with the width w of the elongated hole and has a center axis A_{E} that extends in z direction. The cylindrical eccentric shaft element 41E has also a height, i.e., extends above and below the receiver 90E such that an up or down motion of the receiver 90E due to a deformation of the deformable unit is accommodated by the cylindrical portion. A motor shaft (not shown) is assumed to rotate around a longitudinal center axis A_{M} and to be connected with the eccentric shaft extension 41E so that the eccentric shaft extension 41E moves along a circle C having a diameter D as is shown in Fig. 7. When the eccentric shaft extension 41E moves along circle C, the motion along the x direction occurs freely in the elongated hole 902E and the motion in y direction is transferred to the receiver 90E so that the receiver periodically moves along double arrow P in y direction with a peak-to-peak amplitude coinciding with the diameter D of the circle C. The arm 801E will then transfer this motion to a deformable unit of the motion converter so that the deformable unit is periodically deformed as was discussed in previous paragraphs. At least outer surface regions of the eccentric shaft extension 41E being in contact with the elongated hole 902E and/or at least inner surfaces of the elongated hole 902E may be coated to reduce friction between the two components.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A drive unit (25D) comprising a motion converter (5D) structured for converting a rotational motion provided by a motor shaft (31D) into a linear reciprocating motion of a drive shaft (70D), the motion converter (5D) comprising
a deformable unit (50D);
a mounting unit (60D) connected with the deformable unit (50D);
a coupling unit (59D) connected with the deformable unit (50D), the coupling unit (59D) being structured to receive the drive shaft (70D) or the coupling unit (59D) comprising the drive shaft (70D);
a connector unit (8D) connected with the deformable unit (50D), the connector unit (8D) comprising at least a first essentially U-shaped receiver (90D) being structured for receiving a first eccentric shaft element (41D) of the motor shaft (31D) and having a U-base (9011E) and two U-legs (9012E, 9013E) together defining a first elongated hole (902D) having a length (l), a width (w) and a height (h), and a first bracing element (903D) that connects the two U-legs (9012E, 9013E) of the first essentially U-shaped receiver (90D) on their free ends (9014E, 9015E) such that access into the first elongated hole (902D) across the width (w) and the height (h) of the first elongated hole (903D) is provided, preferably where the first bracing element (903D) is bar-shaped or U-shaped or O-shaped, and where the length (l) is measured from an inner surface of the U-base (9011E) to the free ends (9014E, 9015E) of the U-legs (9012E, 9013E);
the drive unit further comprising the drive shaft (70D) connected with the coupling unit (59D) for providing the linear reciprocating motion in operation;
a motor (30D) having the motor shaft (31D) providing the rotational motion around a longitudinal center axis of the motor shaft (31D) in operation;
a motor shaft extension (40D) coupled to or connected with the motor shaft (31D), the motor shaft extension (40D) comprising at least a first eccentric shaft element (41D) that is arranged eccentrically with respect to the longitudinal center axis so that it moves on a circular path around the longitudinal center axis in operation;
wherein the first eccentric shaft element (41D) extends through the first elongated hole (902D) along a height direction of the first elongated hole (902D), which first eccentric shaft element (41D) has a diameter that tightly fits into the first elongated hole (902D) in a width direction of the first elongated hole (902D) and the first eccentric shaft element (41D) can freely move in the first elongated hole (902D) in a length direction of the first elongated hole (902D) in operation.

2. The drive unit in accordance with claim 1, the motion converter (5D) being an integral element, preferably a plastic injection molding element.

3. The drive unit in accordance with claim 1 or claim 2, the connector unit (8D) comprising at least a first arm element (51C) connecting the first essentially U-shaped receiver (90D) with the deformable unit (50D).

4. The drive unit in accordance with any one of claims 1 to 3, wherein the deformable unit (50D) is structured to periodically deform along a z direction to provide the linear reciprocating motion along the z direction and to periodically deform along a y direction, the z direction and the y direction spanning a plane and wherein the first elongated hole (902D) extends lengthwise along an x direction that is perpendicular to the plane spanned by the z direction and the y direction.

5. The drive unit in accordance with claim 4, wherein the first bar-shaped or U-shaped or O-shaped bracing element (903D) that connects the two U-legs (9012E, 9013E) of the first essentially U-shaped receiver (90D) on their free ends (9014E, 9015E) extends in a plane that is parallel to the plane spanned by the z direction and the y direction.

6. The drive unit in accordance with any one of claims 1 to 5, the connector unit (8D) comprising a second essentially U-shaped receiver (91D) being structured for receiving a second eccentric shaft element (42D) and having a U-base and two U-legs together defining a second elongated hole (912D) having a length, a width and a height and a second bar-shaped or U-shaped or O-shaped bracing element (913D) that connects the two U-legs of the second essentially U-shaped receiver on their free ends such that access into the second elongated hole across the width and the height of the second elongated hole (912D) is provided.

7. The drive unit in accordance with claim 6, the connector unit (8D) comprising at least a second arm element (52C) connecting the second essentially U-shaped receiver (91D) with the deformable unit (50D).

8. The drive unit in accordance with any one of claims 6 or 7, the connector unit (8D) comprising a third essentially U-shaped receiver (92D) being structured for receiving a third eccentric shaft element (43D) and having a U-base and two U-legs together defining a third elongated hole (922D) having a length, a width and a height and a third bar-shaped or U-shaped or O-shaped bracing element (923D) that connects the two U-legs on their free ends such that access into the third elongated hole (922D) across the width and the height of the third elongated hole (922D) is provided.

9. The drive unit in accordance with claim 8, the connector unit (8D) comprising at least a third arm element (53C) connecting the third essentially U-shaped receiver (92D) with the deformable unit (50D), preferably wherein the first arm element (51C) and the third arm element (53C) join each other.

10. The drive unit in accordance with any one of claims 1 to 9, the deformable unit (50D) having a generally convex quadrilateral-type structure, preferably a rhomboidal structure, having four edges and four vertices, where the mounting unit (60D) and the coupling unit (59D) are provided at two essentially opposite vertices of the convex quadrilateral-type structure and the connector unit (8D) is connected with a least one of the two other vertices, preferably with both of the two other essentially opposite vertices.

11. The drive unit in accordance with claim 10 and with any one of claims 6 to 9, wherein the first arm element (51C) is connected with one of the vertices and the second arm element (52C) is connected with the respective opposite vertex.

12. The drive unit in accordance with one of claims 1 to 11, the motor shaft extension (40D) having a second eccentric shaft element (42D) that is arranged eccentrically with respect to the longitudinal center axis, wherein the second eccentric shaft element (42D) extends through the second elongated hole (912D) in the height direction, which second eccentric shaft element (42D) has a diameter that tightly fits into the second elongated hole (902D) in the width direction and the second eccentric shaft element (42D) can freely move in the second elongated hole (902D) in the length direction in operation.

13. The drive unit in accordance with one of claim1 to 12, wherein the first eccentric shaft element (41D) and the second eccentric shaft element (42D) are provided opposite to each other with respect to the longitudinal center axis so that in operation they rotate around the longitudinal center axis with a 180 degrees angular distance.

14. A personal care device (1) comprising the drive unit (25D) in accordance with any one of claims 1 to 13, the personal care device (1) comprising a head section (10) that is coupled with the drive shaft (70D) so that the head section (10) or a driven element (11) of the head section (10) is in operation driven into a back-and-forth motion such as an oscillating motion or a reciprocating motion, optionally wherein the mounting unit (60D) of the motion converter (5D) is fixedly mounted with respect to the motor (30D), and further optionally wherein in operation the circular motion of at least the first eccentric shaft element (41D) causes at least the first essentially U-shaped receiver (90D) to transfer a periodic force onto the deformable unit (50D) so that the deformable unit (50D) periodically deforms, preferably wherein the periodic deformation means a periodic deformation in a z direction and a 180 degrees phase-shifted periodic deformation in a y direction being perpendicular to the z direction.

## Patentansprüche

1. Antriebseinheit (25D), umfassend einen Bewegungsumwandler (5D), der zum Umwandeln einer Drehbewegung, die durch eine Motorwelle (31D) bereitgestellt wird, in eine lineare Hin- und Herbewegung einer Antriebswelle (70D), konstruiert ist, der Bewegungsumwandler (5D) umfassend
eine verformbare Einheit (50D);
eine Montageeinheit (60D), die mit der verformbaren Einheit (50D) verbunden ist;
eine Kuppelungseinheit (59D), die mit der verformbaren Einheit (50D) verbunden ist, wobei die Kuppelungseinheit (59D) konstruiert ist, um die Antriebswelle (70D) oder die Kuppelungseinheit (59D), umfassend die Antriebswelle (70D), aufzunehmen;
eine Verbindereinheit (8D), die mit der verformbaren Einheit (50D) verbunden ist, die Verbindereinheit (8D) umfassend mindestens eine erste im Wesentlichen U-förmige Aufnahme (90D), die zum Aufnehmen eines ersten Exzenterwellenelements (41D) der Motorwelle (31D) konstruiert ist, und eine U-Basis (9011E) und zwei U-Schenkel (9012E, 9013E) aufweist, die zusammen ein erstes Langloch (902D), das eine Länge (I), eine Breite (w) und eine Höhe (h) aufweist, definieren, und ein erstes Verankerungselement (903D), das die zwei U-Schenkel (9012E, 9013E) der ersten im Wesentlichen U-förmigen Aufnahme (90D) an ihren freien Enden (9014E, 9015E) derart verbindet, dass ein Zugang in das erste Langloch (902D) über die Breite (w) und die Höhe (h) des ersten Langlochs (903D) hinweg bereitgestellt wird, vorzugsweise wobei das erste Verankerungselement (903D) stabförmig oder U-förmig oder O-förmig ist und wobei die Länge (I) von einer Innenoberfläche der U-Basis (9011E) zu den freien Enden (9014E, 9015E) der U-Schenkel (9012E, 9013E) gemessen wird;
die Antriebseinheit ferner umfassend die Antriebswelle (70D), die mit der Kuppelungseinheit (59D) zum Bereitstellen der linearen Hin- und Herbewegung im Betrieb verbunden ist;
einen Motor (30D), der eine Motorwelle (31D) aufweist, der die Drehbewegung um eine Längsmittelachse der Motorwelle (31D) im Betrieb bereitstellt;
eine Motorwellenverlängerung (40D), die mit der Motorwelle (31D) gekuppelt oder mit dieser verbunden ist, die Motorwellenverlängerung (40D) umfassend mindestens ein erstes Exzenterwellenelement (41D), das in Bezug auf die Längsmittelachse exzentrisch angeordnet ist, sodass es sich auf einer kreisförmigen Strecke um die Längsmittelachse im Betrieb bewegt;
wobei sich das erste Exzenterwellenelement (41D) durch das erste Langloch (902D) entlang einer Höhenrichtung des ersten Langlochs (902D) erstreckt, wobei das erste Exzenterwellenelement (41D) einen Durchmesser aufweist, der eng in das erste Langloch (902D) in einer Breitenrichtung des ersten Langlochs (902D) passt, und wobei sich das erste Exzenterwellenelement (41D) in dem ersten Langloch (902D) in Längenrichtung des ersten Langlochs (902D) im Betrieb frei bewegen kann.

2. Antriebseinheit nach Anspruch 1, wobei der Bewegungsumwandler (5D) ein einstückiges Element, vorzugsweise ein Kunststoffspritzgusselement ist.

3. Antriebseinheit nach Anspruch 1 oder 2, die Verbindereinheit (8D) umfassend mindestens ein erstes Armelement (51C), das die erste im Wesentlichen U-förmige Aufnahme (90D) mit der verformbaren Einheit (50D) verbindet.

4. Antriebseinheit nach einem der Ansprüche 1 bis 3, wobei die verformbare Einheit (50D) konstruiert ist, um sich entlang einer z-Richtung periodisch zu verformen, um die lineare Hin- und Herbewegung entlang der z-Richtung bereitzustellen, und um sich entlang einer y-Richtung periodisch zu verformen, wobei die z-Richtung und die y-Richtung eine Ebene überspannen, und wobei sich das erste Langloch (902D) der Länge nach entlang einer x-Richtung erstreckt, die senkrecht zu der Ebene ist, die durch die z-Richtung und die y-Richtung überspannt ist.

5. Antriebseinheit nach Anspruch 4, wobei das erste stabförmige oder U-förmige oder O-förmige Verankerungselement (903D), das die zwei U-Schenkel (9012E, 9013E) der ersten im Wesentlichen U-förmigen Aufnahme (90D) an ihren freien Enden (9014E, 9015E) verbindet, sich in einer Ebene erstreckt, die parallel zu der Ebene ist, die durch die z-Richtung und die y-Richtung überspannt ist.

6. Antriebseinheit nach einem der Ansprüche 1 bis 5, die Verbindereinheit (8D) umfassend eine zweite im Wesentlichen U-förmige Aufnahme (91D), die zum Aufnehmen eines zweiten Exzenterwellenelements (42D) konstruiert ist, und eine U-Basis und zwei U-Schenkel aufweist, die zusammen ein zweites Langloch (912D), das eine Länge, eine Breite und eine Höhe aufweist, definieren, und ein zweites stabförmiges oder U-förmiges oder O-förmiges Verankerungselement (913D), das die zwei U-Schenkel der zweiten im Wesentlichen U-förmigen Aufnahme an ihren freien Enden derart verbindet, dass ein Zugang in das zweite Langloch über die Breite und die Höhe des zweiten Langlochs (912D) hinweg bereitgestellt wird.

7. Antriebseinheit nach Anspruch 6, die Verbindereinheit (8D) umfassend mindestens ein zweites Armelement (52C), das die zweite im Wesentlichen U-förmige Aufnahme (91D) mit der verformbaren Einheit (50D) verbindet.

8. Antriebseinheit nach einem der Ansprüche 6 oder 7, die Verbindereinheit (8D) umfassend eine dritte im Wesentlichen U-förmige Aufnahme (92D), die zum Aufnehmen eines dritten Exzenterwellenelements (43D) konstruiert ist, und eine U-Basis und zwei U-Schenkel aufweist, die zusammen ein drittes Langloch (922D), das eine Länge, eine Breite und eine Höhe aufweist, definieren, und ein drittes stabförmiges oder U-förmiges oder O-förmiges Verankerungselement (923D), das die zwei U-Schenkel an ihren freien Enden derart verbindet, dass ein Zugang in das dritte Langloch (922D) über die Breite und die Höhe des dritten Langlochs (922D) hinweg bereitgestellt wird.

9. Antriebseinheit nach Anspruch 8, die Verbindereinheit (8D) umfassend mindestens ein drittes Armelement (53C), das die dritte im Wesentlichen U-förmige Aufnahme (92D) mit der verformbaren Einheit (50D) verbindet, vorzugsweise wobei das erste Armelement (51C) und das dritte Armelement (53C) aneinander anschließen.

10. Antriebseinheit nach einem der Ansprüche 1 bis 9, wobei die verformbare Einheit (50D) eine im Allgemeinen konvexe, vierseitige Art von Konstruktion, vorzugsweise eine rhomboide Konstruktion aufweist, die vier Kanten und vier Scheitelpunkten aufweist, wobei die Montageeinheit (60D) und die Kuppelungseinheit (59D) an zwei im Wesentlichen einander entgegengesetzten Scheitelpunkten der konvexen, vierseitigen Art von Konstruktion bereitgestellt sind und die Verbindereinheit (8D) mit mindestens einem der zwei anderen Scheitelpunkte, vorzugsweise mit beiden der zwei anderen im Wesentlichen einander entgegengesetzten Scheitelpunkte, verbunden ist.

11. Antriebseinheit nach Anspruch 10 und nach einem der Ansprüche 6 bis 9, wobei das erste Armelement (51C) mit einem der Scheitelpunkte verbunden ist und das zweite Armelement (52C) mit dem jeweils entgegengesetzten Scheitelpunkt verbunden ist.

12. Antriebseinheit nach einem der Ansprüche 1 bis 11, wobei die Motorwellenverlängerung (40D) ein zweites Exzenterwellenelement (42D) aufweist, das in Bezug auf die Längsmittelachse exzentrisch angeordnet ist, wobei sich das zweite Exzenterwellenelement (42D) durch das zweite Langloch (912D) in Höhenrichtung erstreckt, wobei das zweite Exzenterwellenelement (42D) einen Durchmesser aufweist, der eng in das zweite Langloch (902D) in Breitenrichtung passt, und sich in dem zweiten Langloch (902D) im Betrieb in Längsrichtung im Betrieb frei bewegen kann.

13. Antriebseinheit nach einem der Ansprüche 1 bis 12, wobei das erste Exzenterwellenelement (41D) und das zweite Exzenterwellenelement (42D) in Bezug auf die Längsmittelachse einander entgegengesetzt bereitgestellt sind, sodass sie sich im Betrieb um die Längsmittelachse mit einem Winkelabstand von 180 Grad drehen.

14. Körperpflegevorrichtung (1), umfassend die Antriebseinheit (25D) nach einem der Ansprüche 1 bis 13, die Körperpflegevorrichtung (1) umfassend einen Kopfstückbereich (10), der mit der Antriebswelle (70D) derart gekuppelt ist, dass der Kopfstückbereich (10) oder ein Antriebselement (11) des Kopfstückbereichs (10) im Betrieb in eine Hin- und Herbewegung, wie eine oszillierende Bewegung oder eine Hin- und Herbewegung, angetrieben wird, wahlweise wobei die Montageeinheit (60D) des Bewegungsumwandlers (5D) in Bezug auf den Motor (30D) fest montiert ist, und ferner wahlweise im Betrieb die kreisförmige Bewegung mindestens des ersten Exzenterwellenelements (41D) bewirkt, dass mindestens die erste im Wesentlichen U-förmige Aufnahme (90D) eine periodische Kraft auf die verformbare Einheit (50D) überträgt, sodass sich die verformbare Einheit (50D) periodisch verformt, vorzugsweise wobei die periodische Verformung eine periodische Verformung in z-Richtung und eine um 180 Grad phasenverschobene periodische Verformung in y-Richtung, die senkrecht zu der z-Richtung ist, bedeutet.

## Revendications

1. Unité d'entraînement (25D) comprenant un convertisseur de mouvement (5D) structuré pour convertir un mouvement de rotation fourni par un arbre moteur (31D) en un mouvement alternatif linéaire d'un arbre d'entraînement (70D), le convertisseur de mouvement (5D) comprenant
une unité déformable (50D) ;
une unité de montage (60D) reliée à l'unité déformable (50D) ;
une unité d'accouplement (59D) reliée à l'unité déformable (50D), l'unité d'accouplement (59D) étant structurée pour recevoir l'arbre d'entraînement (70D) ou l'unité d'accouplement (59D) comprenant l'arbre d'entraînement (70D) ;
une unité de liaison (8D) reliée à l'unité déformable (50D), l'unité de liaison (8D) comprenant au moins un premier récepteur essentiellement en forme de U (90D) structuré pour recevoir un premier élément d'arbre excentrique (41D) de l'arbre moteur (31D) et ayant une base en U (9011E) et deux pattes en U (9012E, 9013E) définissant ensemble un premier trou allongé (902D) ayant une longueur (l), une largeur (w) et une hauteur (h), et un premier élément de renfort (903D) qui relie les deux pattes en U (9012E, 9013E) du premier récepteur essentiellement en forme de U (90D) sur leurs extrémités libres (9014E, 9015E) de telle sorte qu'un accès au premier trou allongé (902D) sur l'ensemble de la largeur (w) et de la hauteur (h) du premier trou allongé (903D) est fourni, de préférence, le premier élément de renfort (903D) étant en forme de barre, de U ou de O, et la longueur (l) étant mesurée à partir d'une surface intérieure de la base en U (9011E) jusqu'aux extrémités libres (9014E, 9015E) des pattes en U (9012E, 9013E) ;
l'unité d'entraînement comprenant en outre l'arbre d'entraînement (70D) relié à l'unité d'accouplement (59D) pour fournir le mouvement alternatif linéaire en fonctionnement ;
un moteur (30D) dont l'arbre moteur (31D) assure le mouvement de rotation autour d'un axe central longitudinal de l'arbre moteur (31D) en fonctionnement ;
une extension d'arbre moteur (40D) accouplée ou reliée à l'arbre moteur (31D), l'extension d'arbre moteur (40D) comprenant au moins un premier élément d'arbre excentrique (41D) qui est agencé de manière excentrique par rapport à l'axe central longitudinal de sorte qu'il se déplace sur une trajectoire circulaire autour de l'axe central longitudinal en fonctionnement ;
dans laquelle le premier élément d'arbre excentrique (41D) s'étend à travers le premier trou allongé (902D) le long d'une direction de la hauteur du premier trou allongé (902D), lequel premier élément d'arbre excentrique (41D) a un diamètre qui s'adapte étroitement au premier trou allongé (902D) dans une direction de la largeur du premier trou allongé (902D) et le premier élément d'arbre excentrique (41D) peut se déplacer librement dans le premier trou allongé (902D) dans une direction de la longueur du premier trou allongé (902D) en fonctionnement.

2. Unité d'entraînement selon la revendication 1, le convertisseur de mouvement (5D) étant un élément intégral, de préférence un élément moulé par injection plastique.

3. Unité d'entraînement selon la revendication 1 ou la revendication 2, l'unité de liaison (8D) comprenant au moins un premier élément de bras (51C) reliant le premier récepteur essentiellement en forme de U (90D) à l'unité déformable (50D).

4. Unité d'entraînement selon l'une quelconque des revendications 1 à 3, dans laquelle l'unité déformable (50D) est structurée pour se déformer périodiquement le long d'une direction z afin de fournir le mouvement alternatif linéaire le long de la direction z et pour se déformer périodiquement le long d'une direction y, la direction z et la direction y couvrant un plan et dans laquelle le premier trou allongé (902D) s'étend dans le sens de la longueur le long d'une direction x qui est perpendiculaire au plan couvert par la direction z et la direction y.

5. Unité d'entraînement selon la revendication 4, dans laquelle le premier élément de renfort (903D) en forme de barre, de U ou de O qui relie les deux pattes en U (9012E, 9013E) du premier récepteur essentiellement en forme de U (90D) sur leurs extrémités libres (9014E, 9015E) s'étend dans un plan qui est parallèle au plan couvert par la direction z et la direction y.

6. Unité d'entraînement selon l'une quelconque des revendications 1 à 5, l'unité de liaison (8D) comprenant un deuxième récepteur essentiellement en forme de U (91D) structuré pour recevoir un deuxième élément d'arbre excentrique (42D) et ayant une base en U et deux pattes en U définissant ensemble un deuxième trou allongé (912D) ayant une longueur, une largeur et une hauteur, et un deuxième élément de renfort (913D) en forme de barre, de U ou de O qui relie les deux pattes en U du deuxième récepteur essentiellement en forme de U sur leurs extrémités libres de telle sorte qu'un accès au deuxième trou allongé sur l'ensemble de la largeur et de la hauteur du deuxième trou allongé (912D) est fourni.

7. Unité d'entraînement selon la revendication 6, l'unité de liaison (8D) comprenant au moins un deuxième élément de bras (52C) reliant le deuxième récepteur essentiellement en forme de U (91D) à l'unité déformable (50D).

8. Unité d'entraînement selon l'une quelconque des revendications 6 ou 7, l'unité de liaison (8D) comprenant un troisième récepteur essentiellement en forme de U (92D) structuré pour recevoir un troisième élément d'arbre excentrique (43D) et ayant une base en U et deux pattes en U définissant ensemble un troisième trou allongé (922D) ayant une longueur, une largeur et une hauteur, et un troisième élément de renfort (923D) en forme de barre, de U ou de O qui relie les deux pattes en U sur leurs extrémités libres de telle sorte qu'un accès au troisième trou allongé (922D) sur la largeur et la hauteur du troisième trou allongé (922D) est fourni.

9. Unité d'entraînement selon la revendication 8, l'unité de liaison (8D) comprenant au moins un troisième élément de bras (53C) reliant le troisième récepteur essentiellement en forme de U (92D) à l'unité déformable (50D), de préférence, dans laquelle le premier élément de bras (51C) et le troisième élément de bras (53C) se joignent l'un à l'autre.

10. Unité d'entraînement selon l'une quelconque des revendications 1 à 9, l'unité déformable (50D) ayant une structure de type quadrilatère généralement convexe, de préférence une structure rhomboïdale, ayant quatre bords et quatre sommets, l'unité de montage (60D) et l'unité d'accouplement (59D) étant fournies au niveau de deux sommets essentiellement opposés de la structure de type quadrilatère convexe et l'unité de liaison (8D) étant reliée à au moins l'un parmi les deux autres sommets, de préférence à deux des deux autres sommets essentiellement opposés.

11. Unité d'entraînement selon la revendication 10 et selon l'une quelconque des revendications 6 à 9, dans laquelle le premier élément de bras (51C) est relié à l'un des sommets et le deuxième élément de bras (52C) est relié au sommet opposé respectif.

12. Unité d'entraînement selon l'une quelconque des revendications 1 à 11, l'extension d'arbre moteur (40D) ayant un deuxième élément d'arbre excentrique (42D) qui est agencé de manière excentrique par rapport à l'axe central longitudinal, dans laquelle le deuxième élément d'arbre excentrique (42D) s'étend à travers le deuxième trou allongé (912D) dans la direction de la hauteur, lequel deuxième élément d'arbre excentrique (42D) a un diamètre qui s'adapte étroitement au deuxième trou allongé (902D) dans la direction de la largeur et le deuxième élément d'arbre excentrique (42D) peut se déplacer librement dans le deuxième trou allongé (902D) dans la direction de la longueur en fonctionnement.

13. Unité d'entraînement selon l'une quelconque des revendications 1 à 12, dans laquelle le premier élément d'arbre excentrique (41D) et le deuxième élément d'arbre excentrique (42D) sont fournis à l'opposé l'un de l'autre par rapport à l'axe central longitudinal de sorte qu'en fonctionnement, ils tournent autour de l'axe central longitudinal avec une distance angulaire de 180 degrés.

14. Dispositif de soins personnels (1) comprenant l'unité d'entraînement (25D) selon l'une quelconque des revendications 1 à 13, le dispositif de soins personnels (1) comprenant une section de tête (10) qui est accouplée à l'arbre d'entraînement (70D) de sorte que la section de tête (10) ou un élément entraîné (11) de la section de tête (10) est en fonctionnement entraîné dans un mouvement de va-et-vient tel qu'un mouvement oscillant ou un mouvement alternatif, éventuellement, dans lequel l'unité de montage (60D) du convertisseur de mouvement (5D) est montée de manière fixe par rapport au moteur (30D), et en outre, éventuellement, dans lequel, en fonctionnement, le mouvement circulaire d'au moins le premier élément d'arbre excentrique (41D) amène au moins le premier récepteur essentiellement en forme de U (90D) à transférer une force périodique sur l'unité déformable (50D) de sorte que l'unité déformable (50D) se déforme périodiquement, de préférence, dans lequel la déformation périodique signifie une déformation périodique dans une direction z et une déformation périodique déphasée de 180 degrés dans une direction y étant perpendiculaire à la direction z.
